# EUROPÄISCHE PATENTSCHRIFT

(11) **EP 2 333 310 B1**
(45) Veröffentlichungstag und Bekanntmachung des Hinweises auf die Patenterteilung: **11.06.2014**
(21) Anmeldenummer: 10015378.2
(22) Anmeldetag: 07.12.2010
(51) Int. Cl.: F03B 13/24, F03B 13/14

(54) **Wellenkraftwerk mit Diffusor für die Luftturbine**
Wave power plant with Diffuser for the air turbine
Centrale houlomotrice avec diffuseur pour la turbine à air

(30) Priorität: 10.12.2009 DE 102009057513
(43) Veröffentlichungstag der Anmeldung: 15.06.2011
(73) Patentinhaber: Voith Patent GmbH, 89522 Heidenheim (DE)
(72) Erfinder: Banzhaf, Hans-Ulrich, 89522 Heidenheim (DE); Starzmann, Ralf, 89555 Söhnstetten (DE)
(74) Vertreter: Weitzel, Wolfgang

(56) Entgegenhaltungen:
- DE-A1- 2 531 652
- DE-A1-102008 004 761
- JP-A- 58 178 881
- JP-A- 58 200 081

## Beschreibung

Die Erfindung betrifft einen Diffusor für die Luftturbine eines Wellenkraftwerks, insbesondere für eine bidirektional anströmbare, axial durchströmte und gleichsinnig umlaufende Turbine, wie eine axial angelegte Wells-Turbine.

Zur Ausnutzung der Bewegungsenergie von Wellen können Wellenkammern mit einer unter dem Wasserspiegel liegenden Zugangsöffnung verwendet werden. Bel einlaufender See hebt sich In der Wellenkammer der Wasserspiegel und komprimiert ein darüber befindliches Luftvolumen, beim Zurückweichen der Welle entsteht ein Sog in der Wellenkammer, Wird durch einen Strömungskanal eine pneumatische Verbindung zwischen dem in der Wellenkammer eingeschlossenen Luftvolumen und der Außenumgebung geschaffen, resultiert eine oszillierende Strömung im Strömungskanal, die mittels einer bidirektional anströmbaren Luftturbine in eine Rotationsbewegung zum Antrieb eines elektrischen Generators umgesetzt wird. Wellenkraftwerke, die nach dem voranstehend erläuterten Prinzip arbeiten, werden auch als OWC-Kraftwerke (oscillating wave column) bezeichnet. Eine solche Anlage wird beispielhaft durch die US 5,191,225 beschrieben.

Ein weiteres Beispiel für eine solche Anlage wird in JP 58200081 beschrieben.

Zum Betrieb von QWG-Kraftwerken werden bevorzugt bidirektional anströmbare Luftturbinen verwendet, die beim Wechsel der Anströmungsrichtung ihren Drehsinn beibehalten. Diese Eigenschaft erfüllt eine Wells-Turblne, wie sie exemplarisch in der US 4,313,711 beschrieben wird, Dabei weist eine Wells-Turbine typischerweise eine Vielzahl von Turbinenblättern auf, die mit tropfenförmigen, symmetrischen Profilen versehen sind und deren Profilsehnen in der Rotationsebene der Turbine liegen. Die solchermaßen ausgebildeten Turbinenblätter werden von einem nabenförmigen Element getragen. Des Weiteren kann als alternative Ausführung einer bidirektional anströmbaren Luftturbine eine impulsturbine verwendet werden, wie sie beispielsweise durch die WO 06137696 A1 offenbart wird.

Ein Mittel zur Steigerung des Wirkungsgrads eines gattungsgemäßen Wellenkraftwerks besteht In der Verwendung eines Diffusors nachfolgend zur Luftturbine. Dieser Ist typischerweise im Mündungsbereich des Strömungskanals zur Außenumgebung vorgesehen. Allerdings haben sich die bisher verwendeten Diffusoren mit einem sich aufweitenden Außenrohr und einem zylindrisch angelegten Kernrohr im Strömungsschatten der feststehenden Teile der Luftturbine, insbesondere des Generators, als nicht hinreichend effizient herausgestellt.

Der Erfindung liegt daher die Aufgabe zugrunde, einen Diffusor im Anschluss an eine Luftturbine an der Mündung eines von einer Wellenkammer eines OWC-Kraftwerks ausgehenden Strömungskanals anzugeben, der sich durch eine hohe Wlrkungsgradsteigerung der Luftturbine und durch eine möglichst kurze axiale Baulänge auszeichnet. Des Weiteren sollte der Diffusor konstruktiv und fertlgungstechnisch einfach sein.

Die der Erfindung zugrunde liegende Aufgabe wird durch die Merkmale des unabhänglgen Anspruchs gelöst. In den Unteransprüchen sind vortellhafte Ausgestaltungen gefasst.

Zur Lösung der Aufgabe haben die Erfinder erkannt, dass ein Diffusor auf die starke Drallkomponente im Nachlaufbereich zur Luftturbine abgestimmt sein muss. Hieraus ergibt sich ein unüblich großer Öffnungswinkel für die Außenschale des Diffusors, um sicherzustellen, dass das Produkt aus Umfangsgeschwlndigkeit der Strömung und Radius im Wesentlichen konstant bleibt. In einem nächsten Schritt Ist ein Kernrohr vorzusehen, das wiederum einen hinreichend großen Öffnungswinkel, d.h. in Ausblasrichtung gesehen eine starke radiale Aufweitung, aufweist. Dabei wurde berücksichtigt, dass für Drall behaftete Rohrströmungen Im Zentrum ein Totbereich für die Strömung vorliegt, der Energie dissipiert. Daher soll mit dem sich aufweitenden Kernrohr dieser stark turbulente Bereich geblockt werden.

Als Resultat entsteht ein Axial-Axial-Diffusor mit großem Öffnungswinkel bzw. ein Axial-Radial-Diffusor, wobei beide Varianten mit einem sich stark aufweltenden Kernrohr versehen sind. Hierauf aufbauend geht die Erfindung einen Schritt weiter, indem von den Erfindern erkannt wurde, dass eine starre Geometrie des Kernrohrs und der Außenschale des Diffusors nicht für alle Betriebsbereiche gleichermaßen zur Rückgewinnung einer großen stationären Druckdifferenz geeignet ist. Dabei ist der Umstand von Bedeutung, dass die Diffusordurchströmung einer gattungsgemäßen Anlage ständig wechselt. Zusätzlich tritt neben einer Oszillationsbewegung im Strömungskanal ein hoher Fluktuationsanteil auf, der sich aus einer sich permanent verändernden Wellencharakteristik ergibt, die zu stochastischen Druckschwankungen In der Wellenkammer führt. Darüber hinaus ist der Umstand von Bedeutung, dass die Variation der Umlaufgeschwindigkeit der typischerweise verwendeten Luftturbinen gegenüber dem ständigen Wechsel der Anströmungscharakteristik eine längere Zeltkonstante aufweist. Hieraus folgt, dass sich das Verhältnis zwischen der-durch die Drehbewegung der Luftturbine verursachten Strömungsgeschwindigkeiten In Umfangsrichtung und den Axialströmungskomponenten permanent verändert.

Zur Lösung dieser Problematik weist der erfindungsgemäße Diffusor ein Kernrohr auf, dessen Kontur dazu geeignet ist, einen quasi stationären Wirbel, der die effektive Kontur des Kernrohrs beeinflusst, örtlich zu fixieren. Hierzu wird ein Kernrohr verwendet, das in einen ersten Axialabschnitt und einen zweiten Axialabschnitt unterteilt wird. Dabei beginnt der erste Axialabschnitt an dem zur Luftturbine weisenden Einlassbereich des Diffusors und endet an einer radialen Engstelle des Kernrohrs. Der anschließende zweite Axialabschnitt reicht von der radialen Engstelle bis zur Diffusorausgangsseite, d.h. bis zur Außenumgebung. Demnach nimmt die maximale radiale Erstreckung des Kernrohrs im ersten Axialabschnitt in Ausblasrichtung bis zur radialen Engstelle kontinuierlich ab und im zweiten Axialabschnitt kontinuierlich zu. Als Resultat bildet sich beim Durchströmen an der radialen Engstelle zwischen den beiden Axialabschnitten eine quasi stationäre Strömungswalze aus. Aufgrund des Zurückweichens der Kontur des Kernrohrs nach radial innen wird dieser typischerweise toroidal ausgeblldete Strömungswirbel örtlich fixiert und entnlmmt daher der Strömung nur einen geringen Energiebetrag, der deutlich geringer ist im Vergleich zu einer ständigen Wirbelneubildung, die bei mit der Strömung mitgerissenen Wirbeln auftritt.

Die Außenschale des Diffusors ist so gestaltet, das in Ausblasrichtung ein freier Strömungsquerschnitt des Diffusors vorliegt, der monoton zunimmt. Entsprechend kann insbesondere Im Bereich des ersten Axialabschnitts bis zur radialen Engstelle des Kernrohrs die Außenschale des Diffusors einen Abschnitt mit einem sich In Ausblasrichtung verringernden Innendurchmesser aufwelsen, um eine Strömungsablösung an der Innenwandung der Außenschale zu verhlndern,

Aufgrund der lokalisierten, quasi stationären Wirbelbildung wird die effektive Kontur des Kernrohrs durch eine Umhüllende festgelegt, die den quasi stationären Wirbel einschließt. Dies führt wiederum zum Vorteil, dass der andernfalls stark turbulente Totbereich der Strömung zentral im Diffusor effektiv geblockt und zugleich eine permanente Anpassung dieser effektiven Kontur möglich ist, indem in Abhängigkeit der aktuellen Diffusordurchströmung der quasi stationäre Wirbel mit unterschiedlicher Wirbelstärke ausgebildet wird.

In einem ersten Extremfall für eine erste Betriebsbedingung beim Ausblasen llegt kein oder ein verschwindend kleiner stationärer Wirbel vor und der erste Axialabschnitt weist eine große effektive Strömungsquerschnittsvergrößerung auf. Im zweiten gegenteilig extremen Betriebsfall ebenfalls beim Ausblasen ist der quasi stationäre Wirbel stark ausgeprägt und die effektive Kontur zur Verblockung des Zentralquerschnitts für die Hauptströmung führt zu einem großen effektiven Öffnungswinkel, der insbesondere für einen hohen Volumenstrom mit großem Drallanteil effizient ist. Des Weiteren hat sich der erfindungsgemäße Diffusor auch für den Einsaugzyklus als vorteilhaft erwiesen. Hier wirkt der Diffusor aufgrund der entgegengesetzten Durchströmung als Konfusor, wobei die Einschnürung des Kernrohrs die Strömung im Nachlauf und damit in der nachfolgenden Luftturbine verstärkt nach radial außen verlagert und so deren Wirkungsgrad erhöht. Ferner werden wiederum Wirbel am Kernrohr durch die Fixierungswirkung an der radialen Einbuchtung am Verfrachten mit der Strömung gehlndert, sodass eine ständige Wirbelneubildung unterdrückt wird.

Des Weiteren führt der erfindungsgemäße Diffusor zu einer kurzen Baulänge in Axialrichtung und erlaubt aufgrund der wirkungsvollen Strömungsverlangsamung beim Ausblasen und der Führung der Strömung nach radial außen am Ausgang des Diffusors zur Außenumgebung hin weitere Komponenten vorzusehen. Besonders bevorzugt wird in diesem Bereich eine Absperrvorrichtung und/oder ein Leitapparat angeordnet, sodass diese Komponenten wiederum nicht im Strömungskanalbereich, in dem sich die Luftturbine befindet, untergebracht werden müssen und somit die Gesamtbaulänge der Anlage in Axialrichtung weiter verringert wird. Dabei kann Insbesondere auf ein zusätzliches Sperrventll im Strömungskanal zum sicheren Stillsetzen der Anlage verzichtet werden.

Nachfolgend wird die Erfindung anhand von Ausführungsbeispielen mit Figurendarstellungen genauer erläutert, die im Einzelnen Folgendes darstellen:
- Figur 1: zeigt einen erflndungsgemäßen Axial-Axial-Diffusor anschließend an eine bidirektionale Luftturbine Im Längsschnitt.
- Figur 2: zeigt eine weitere Ausgestaltung eines erfindungsgemäßen Diffusors im Längsschnitt, der als Axial-Radial-Diffusor angelegt ist.
- Figur 3: zeigt ein gattungsgemäßes Wellenkraftwerk mit einem Diffusor nach dem Stand der Technik.

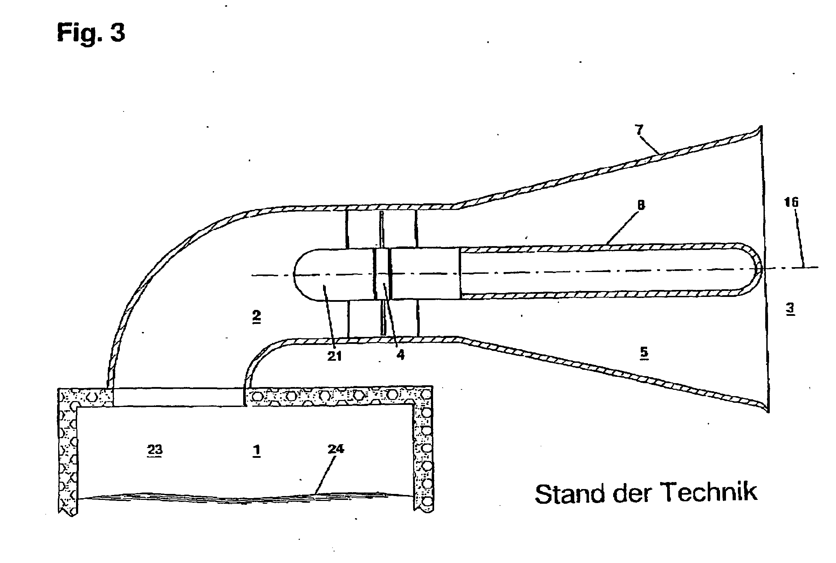

Figur 3 stellt schematisch vereinfacht die Grundkomponenten eines gattungsgemäßen OWC-Wellenkraftwerks dar. Ersichtlich ist die Wellenkammer 1, in der der schwankende Wasserspiegel 24 zur Druckvariation Im darüber befindlichen Luftraum 23 führt, Hiervon geht ein Strömungskanal 2 aus, der über das Ausblasen und Einsaugen kinetische Energie auf eine Luftturbine 4 mit bidirektionaler Anströmbarkeit und gleichsinnigem Umlauf, vorliegend eine Welles-Turbine, überträgt. Der in Figur 3 gezeigte bekannte Diffusor 5 am Mündungsbereich des Strömungskanals 2 weist ein Kernrohr 8 mit einem konstanten Durchmesser auf. Für eine solche Geometrie hat sich herausgestellt, dass der Druckdifferenzkoeffzlent C_{p Diiff} als Verhältnis zwischen dem Rückgewinn an statischem Druck und dynamischem Druck eingangsseitig am Diffusor einen zu kleinen Wert autweist, was insbesondere auf die hohe Drallkomponente in der Nachlaufströmung zur Luftturbine 4 zurückzuführen Ist. Des Weiteren treten im wandungsnahen Bereich des Diffusors starke Strvmungsabläsungen auf.

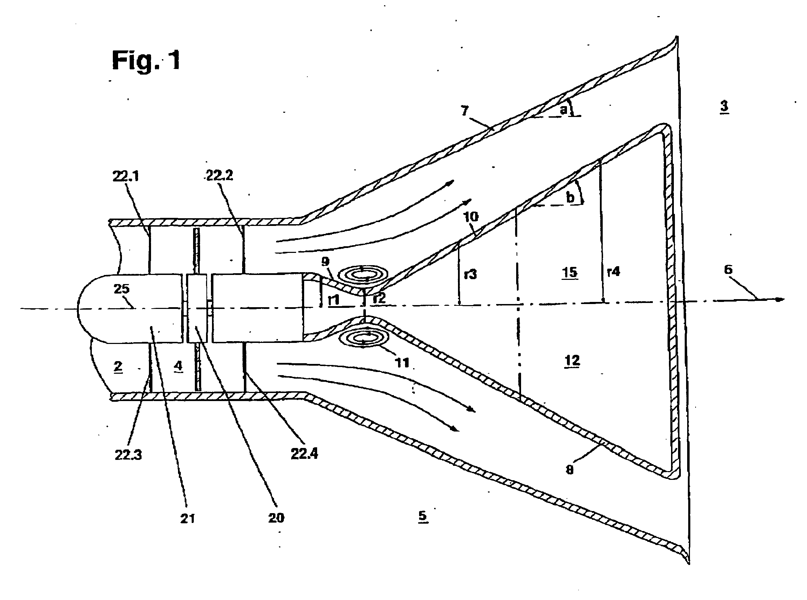

Figur 1 zeigt ein erstes Ausgestaltungsbeispiel eines erfindungsgemäßen Diffusors in Form eines Axial-Axial-Diffusors im Längsschnitt, der den Mündungsbereich des Strömungskanals 2 bildet. Im Betriebsbereich des Ausblasens llegt der Diffusor 5 stromab zur Luftturbine 4. Für diese sind schematisch vereinfacht der umlaufende Teil mit dem Luftturbinenrotor 20 und der feststehende Tell skizziert, der den elektrischen Generator 21 umfasst, welcher mittels der Streben 22.1, 22.2, 22.3 und 22,4 zentral im Strömungskanal 2 angebracht ist und den Luftturbinenrotor 20 trägt.

Der erfindungsgemäße Diffusor weist eine Außenschale 7 mit einem großen Öffnungswinkel 2a auf. Der die Wandungssteigung charakterlsierende halbe Öffnungswinkel a ist bevorzugt größer als 4° gewählt. Hieraus resultiert ein Öffnungswinkel für die Außenschale 7 von wenigstens 8°. Besonders bevorzugt werden jedoch noch größere Öffnungswinkel im Bereich von größer als 15°,

Des Weiteren liegt ein Kernrohr 8 vor, das in Axialrichtung 6 in einen ersten Axialabschnitt 9 und einen zweiten Axialsbrchnitt 10 unterteilt ist. Dabei wird die Axialrichtung 6 für die vorliegende Ausgestaltung durch die Rotationsachse 25 der Luftturbine 4 festgelegt. Ferner weist die in Figur 1 gezeigte Axialrichtung 6 zur Außenumgebung 3. Es sind jedoch auch Ausführungen mit einer Krümmung im Strömungskanal 2 stromabwärts zur Luftturbine 4 denkbar. Für diesen Fall wird die Axialrichtung 6 durch die Ausblasrichtung als Mlttelung aller Geschwlndigkeltskomponenten im Strömungskanal auf einem mit der Dlffusoreingangsseite übereinstimmenden Querschnitt definiert.

Erfindungsg®mäß schnürt sich der erste Axialabschnitt 9 in Ausblasrichtung ein, d.h. für die vorliegende rotationssymmetrlsche Ausgestaltung liegt in diesem Bereich ein negativer Öffnungswinkel vor. Entsprechend ist die maximale radiale Erstreckung r₁ größer als die weiter stromab liegende weitere maximale radiale Erstreckung r₂, die zugleich die Lage der stärksten Einschnürungen markiert. Hleran schließt sich der zweite Axialabschnitt 10 des Kernrohrs 8 an, der in Ausblasrichtung eine zunehmende Radialerstreckung aufweist. Entsprechend ist die exemplarisch gewählte dritte radiale Erstreckung r₃ kleiner als die beim Ausblasen stromabwärts liegende vierte radiale Erstreckung r₄. Dabei erfolgt für eine vorteilhafte Ausgestaltung die Querschnittsabnahme im ersten Axialabschnitt 9 ebenso kontinuierlich wie die Querschnittszunahme im zweiten Axialabschnitt 10. Ferner sind Ausführungsformen denkbar, für die die radiale Verjüngung bzw. radiale Aufweitung stufenförmig verläuft. Eine solche Ausgestaltung ist im Einzelnen nicht in den Figuren dargestellt.

Die Wirkung der radialen Einschnürung am Kernrohr 8 ist Folgende: im Übergang zwischen dem sich radial verjüngenden ersten Axialabschnitt 9 und dem sich radial aufweitenden zweiten Axialabschnitt 10 wird wenigstens für bestimmte Betriebssituationen ein quasi stationärer Wirbel 11 fixiert. Dies ist skizzenhaft in Figur 1 für eine Durchströmung des Diffusors in Ausblasrichtung dargestellt. Ersichtlich ist die Strömungsverdrängungswirkung durch den Wirbel 11, der den effektiven Querschnitt des Kernrohrs 8 verändert. Dabei wird die Strömung nach radial außen zur Außenschale 7 des Diffusors 5 hin gedrängt, was für die vorliegende, stark drall behaftete Strömung den Wirkungsgrad des Diffusors erhöht. Bei einem sich verringernden Volumenstrom beim Ausblasen bzw. während des Einsaugzykluses wird der voranstehend beschrlebene Wirbel nicht in der ausgeprägten Form vorliegen. Entsprechend ist das Kernrohr 8 strömungsadaptiv gestaltet.

Durch die Einschnürung im Übergangsbereich zwischen dem ersten Axialabschnitt 9 und dem zweiten Axialabschnitt 10 werden entstehende Wirbel fixiert, sodass eine ständige Wirbelablösung vermieden wird. Hieraus folgt, dass der Strömung nicht ständig Energie zur Ausbildung von Ablüsungswirbel entzogen wird, worin eine weitere Erklärung für die Effizienzsteigerung durch den erfindungsgemäßen Diffusor liegt.

Des Weiteren zeigt die Ausgestaltung gemäß Figur 1 einen Öffnungswinkel 2b für das Kernrohr 8 in dessen zweiten Axialabschnitt 10, der größer ist als der Öffnungswinkel 2a der Außenschale 7. Hierdurch folgt ein relativ kleines ausgangs- zu eingangsseitiges Flächenverhältnis des Diffusors 5 und es entsteht eine starke radiale Aufweitung zur effizienten Ausnutzung der drallbehafteten Strömungsanteile. Ferner umfasst der zweite Axialabschnitt (10) des Kernrohrs (8) eine bis zur Außenumgebung (3) reichende äußere Hälfte (15), die den zentralen Totbereich (12) der Strömung im Diffusor (5) ausfüllt.

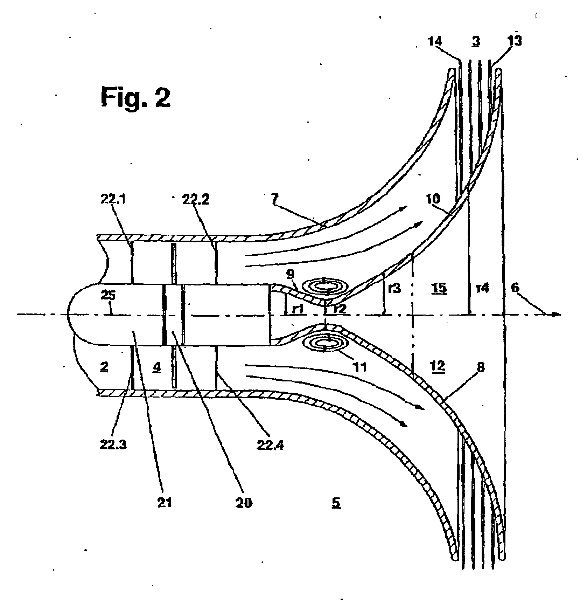

Figur 2 zeigt eine alternative Ausgestaltung, für die im Vergleich zur Ausführungsform gemäß Figur 1 die Ausgangsseite des erfindungsgemäßen Diffusors 5 verändert ist. Die erfindungsgemäße Einschnürung zwischen dem ersten Axialabschnitt 9 und dem zweiten Axialabschnitt 10 des Kernrohrs 8 ist weiterhin vorhanden. Abweichend ist lediglich die Ausgestaltung als Axial-Redial-Diffusor, der besonders effizient zu einer kurzen axialen Baulänge führt. Ferner ist eine Weitergestaltung dargestellt, für die ausgangsseitig am Diffusor, jeweils bezogen auf die Ausblasrichtung, weitere Komponenten vorgesehen sind. Im Einzelnen handelt es sich hierbei um eine Absperrvorrichtung 13, die ein zusätzliches Sperrventil im Strömungskanal 2 überflüssig macht. Des Weiteren ist die Absperrvorrichtung 13 so ausgebildet, dass sie zugleich als Leitapparat 14 dient. Auch eine separate, gestaffelte Abfolge dieser beiden Komponenten ist denkbar, jedoch im Einzelnen nicht In der Figurendarstellung gezeigt. Als weitere im Einzelnen nicht dargestellte Komponente können Prallplatten, die dem Schallschutz dienen, auf der Ausgangsseite des Diffusors vorgesehen sein, da In diesem Bereich die Strömung effizient verlangsamt ist und sich der strömungsblockierende Einfluss derartiger Komponenten verringert.

Weitere Ausgestaltungen der Erfindung sind denkbar. Dabei ist es insbesondere möglich, den Diffusor abweichend zur Rotationssymmetrie etwa an eine, den Auslass umgebende Raumstruktur anzupassen. Des Weiteren kann das erfindungsgemäße Konzept auch für einen gebogenen Auslassbereich in einem Strömungskanal verwandt werden, soweit ein Kernrohr 8 senkrecht zur Ausblasrichtung eine radiale Einbuchtung aufweist. Weitere Variationen der Erfindung ergeben sich aus den nachfolgenden Ansprüchen.

### Bezugszeichenliste

- 1: Wellenkammer
- 2: Strömungskanal
- 3: Außenumgebung
- 4: Luftturbine
- 5: Diffusor
- 6: Axialrichtung
- 7: Außenschale
- 8: Kernrohr
- 9: erster Axlalabschnitt
- 10: zweiter Axialabschnitt
- 11: Wirbel
- 12: Totbereich
- 13: Absperrvorrichtung
- 14: Leitapparat
- 15: äußere Hälfte
- 20: Luftturbinenrotor
- 21: elektrischer Generator
- 22.1, 22.2 22.3, 22.4: Streben
- 23: Luftraum
- 24: Wasserspiegel
- 25: Rotationsachse
- r₁, r₁, r₂, r₃, r₄: radiale Erstreckung
- a, b: halber Öffnungswinkel

## Patentansprüche

1. Wellenkraftwerk, umfassend
eine Wellenkammer (1);
einen Strömungskanal (2), der eine pneumatische Verbindung zwischen der Wellenkammer (1) und der Außenumgebung (3) herstellt;
eine bidirektional anströmbare, axial durchströmte Luftturbine (4) mit gleichslnniger Umlaufrichtung, die im Strömungskanal (2) angeordnet ist;
einen Diffusor (5), der den Abschluss des Strömungskanals (2) zur Außenumgebung (3) hin bildet, wobei dem Diffusor (5) eine Axiatrichtung (6) zugeordnet Ist;
**dadurch gekennzeichnet, dass**
der Diffusor (5) ein Kernrohr (8) aufweist, dessen maximale radiale Erstreckung (rᵢ) senkrecht zur Axialrichtung (6) in einem ersten Axlalabschnitt (9) kontinuierlich abnimmt und In einem zweiten Axlalabschnitt (10) kontinulerlich zunimmt, wobei der zweite Axialabschnitt (10) dem ersten Axialabschnitt (9) in Ausblasrichtung nachfolgt und bis zur Außenumgebung (3) reicht.

2. Wellenkraftwerk nach Anspruch 1, **dadurch gekennzeichnet, dass** der Diffusor (5) als Axial-Radial-Diffusor ausgebildet Ist.

3. Wellenkraftwerk nach Anspruch 1, **dadurch gekennzeichnet, dass** der Diffusor (5) als Axial-Axial-Diffusor ausgebildet Ist.

4. Wellenkraftwerk nach einem der vorausgehenden Ansprüche, **dadurch gekennzeichnet, dass** das Kernrohr (8) im zweiten Axialabschnitt (10) über seinen gesamten Verlauf einen größeren Öffnungswlnkel (2b) als eine das Kernrohr (8) umgebende Außenschale (7) des Diffusors (5) aufweist.

5. Wellenkraftwerk nach einem der vorausgehenden Ansprüche, **dadurch gekennzeichnet, dass** der Übergang vom ersten Axialabschnitt (9) zum zweiten Axialabschnitt (10) derart ausgebildet Ist, dass ein toroidaler Strömungswirbel (11) örtlich fixiert wird.

6. Wellenkraftwerk nach einem der vorausgehenden Ansprüche, **dadurch gekennzeichnet, dass** wenigstens die in die Außenumgebung (3) reichende äußere Hälfte (15) des zweiten Axialabschnitts (10) des Kernrohrs (8) einen Totbereich (12) der Strömung im Diffusor (5) ausfüllt.

7. Wellenkraftwerk nach einem der vorausgehenden Ansprüche, **dadurch gekennzeichnet, dass** am Ausgang des Diffusors (5) zur Außenumgebung (3) hin eine Absperrvorrichtung (13) vorgesehen ist.

8. Wellenkraftwerk nach einem der vorausgehenden Ansprüche, **dadurch gekennzeichnet, dass** am Ausgang des Diffusors (5) zur Außenumgebung (3) hin ein Leitapparat (14) vorgesehen ist.

## Claims

1. A wave power plant, including
a wave chamber (1);
a flow channel (2), which creates a pneumatic connection between the wave chamber (1) and the surrounding atmosphere (3);
an air turbine (4) with the air flowing from both sides and through which flows a liquid axially, with the same rotation direction, which is arranged in the flow channel (2);
a diffusor (5), which forms the termination of the flow channel (2) to the surrounding atmosphere (3), wherein the diffusor (5) follows an axial direction (6); **characterised in that**
the diffusor (5) presents a core tube (8), whose maximum radial extension (n) continuously decreases perpendicular to the axial direction (6) in a first axial section (9) and continuously increases in a second axial section (10), wherein the second axial section (10) follows the first axial section (9) in the exhaust direction and reaches up to the surrounding atmosphere (3).

2. A wave power plant according to claim 1, **characterised in that** the diffusor (5) is designed as an axial-radial-diffusor.

3. A wave power plant according to claim 1, **characterised in that** the diffusor (5) is designed as an axial-axial-diffusor.

4. A wave power plant according to one of the previous claims, **characterised in that** the core tube (8) presents in the second axial section (10) over its whole length a larger opening angle (2b) than an outer shell (7) of the diffusor (5) encompassing the core tube (8).

5. A wave power plant according to one of the previous claims, **characterised in that** the transition from the first axial section (9) to the second axial section (10) is designed in such a way that a toroidal whirl (11) is fixed in position locally.

6. A wave power plant according to one of the previous claims, **characterised in that** at least the external half (15) of the second axial section (10) of the core tube (8) reaching into the surrounding atmosphere (3) fills a dead zone (12) of the flow in the diffusor (5).

7. A wave power plant according to one of the previous claims, **characterised in that** a shutoff device (13) is provided at the outlet of the diffusor (5) up to the surrounding atmosphere (3).

8. A wave power plant according to one of the previous claims, **characterised in that** a guiding apparatus (14) is provided at the outlet of the diffusor (5) up to the surrounding atmosphere (3).

## Revendications

1. Centrale marémotrice, comprenant :
une chambre à vagues (1) ;
un canal d'écoulement (2), qui produit une liaison pneumatique entre la chambre à vagues (1) et l'environnement extérieur (3) ; une turbine à air (4) exposée à un écoulement bidirectionnel, avec un sens de circulation identique, qui est disposée dans le canal d'écoulement (2); un diffuseur (5), qui constitue la terminaison du canal d'écoulement (2) vers l'environnement extérieur (3), où une direction axiale (6) est affectée au diffuseur (5) ; **caractérisée en ce que** le diffuseur (5) présente un tuyau central (8), dont la ou les extensions radiales maximales réduise de façon continuent à la verticale de la direction axiale (6) dans un premier tronçon axial (9) et augmentent de façon continue dans un second tronçon axial (10), où le second tronçon axial (10) succède au premier tronçon axial (9) dans la direction de soufflage et parvient à l'environnement extérieur (3).

2. Centrale marémotrice selon la revendication 1, **caractérisée en ce que** le diffuseur (5) est sous forme de diffuseur axial radial.

3. Centrale marémotrice selon la revendication 1, **caractérisée en ce que** le diffuseur (5) est sous forme de diffuseur axial axial.

4. Centrale marémotrice selon l'une quelconque des revendications précédentes, **caractérisée en ce que** le tuyau central (8) présente dans le second tronçon axial (10) sur l'ensemble de son parcours un angle d'ouverture (2b) plus grand qu'une enveloppe extérieure (7) du diffuseur (5) entourant le tuyau central (8).

5. Centrale marémotrice selon l'une quelconque des revendications précédentes, **caractérisée en ce que** le passage du premier tronçon axial (9) au second tronçon axial (10) est constitué de telle sorte qu'un tourbillon d'écoulement toroïdal (11) est fixé à demeure.

6. Centrale marémotrice selon l'une quelconque des revendications précédentes, **caractérisée en ce qu'**au moins la moitié externe (15) du second tronçon axial (10) du tuyau central (8), moitié parvenant à l'environnement extérieur (3), remplit une zone morte (12) de l'écoulement dans le diffuseur (5).

7. Centrale marémotrice selon l'une quelconque des revendications précédentes, **caractérisée en ce qu'**un système de blocage (13) est prévu à la sortie du diffuseur (5) et dirigé vers l'environnement extérieur (3).

8. Centrale marémotrice selon l'une quelconque des revendications précédentes, **caractérisée en ce qu'**un distributeur (14) est prévu à la sortie du diffuseur (5) et dirigé vers l'environnement extérieur (3).
